# EUROPÄISCHE PATENTSCHRIFT

(11) **EP 1 081 361 B1**
(45) Veröffentlichungstag und Bekanntmachung des Hinweises auf die Patenterteilung: **09.02.2005**
(21) Anmeldenummer: 00114084.7
(22) Anmeldetag: 07.07.2000
(51) Int. Cl.: F02D 41/22, F02D 41/14

(54) **Funktionsüberwachung eines Luftmassenregelsystems**
Function monitoring of an air mass controlling system
Contrôle du fonctionnement d'un système de régulation de masse d'air

(30) Priorität: 28.08.1999 DE 19941006
(43) Veröffentlichungstag der Anmeldung: 07.03.2001
(73) Patentinhaber: Volkswagen Aktiengesellschaft, 38436 Wolfsburg (DE)
(72) Erfinder: Nitzke, Hans-Georg, 38547 Wettmershagen (DE); Rebohl, Thorsten, 38100 Braunschweig (DE)

(56) Entgegenhaltungen:
- EP-A- 0 791 736
- EP-A- 0 810 361
- DE-C- 19 705 766
- US-A- 5 190 012

## Beschreibung

Die Erfindung betrifft ein Verfahren zum Überwachen der Funktion eines Luftmassenregelsystems für eine Brennkraftmaschine mit Abgasrückführung.

In heutigen Brennkraftmaschinen wird zur Regelung der Abgasrückführung ein Luftmassensensor eingesetzt, der im Frischluft-Ansaugtrakt der Brennkraftmaschine angeordnet ist und mit dessen Hilfe die angesaugte Frischluft gemessen wird. Der von diesem Sensor gelieferte Messwert wird genutzt, um einerseits ein Ventil einzustellen, das die rückgeführte Abgasmenge der Brennkraftmaschine bestimmt, andererseits dient er zur Begrenzung der maximal eingespritzten Kraftstoffmasse in Abhängigkeit von der angesaugten Frischluftmasse.

Treten Fehler in der Messung der zugeführten Frischluftmasse auf, z.B. durch Verschmutzung des Sensors oder aufgrund von Leckagen im Ansaugkanal, so führt dies dazu, dass falsche Abgasrückführraten oder Kraftstoffbegrenzungsmengen eingestellt werden. Die Folge davon kann eine Verschlechterung der Schadstoffemission und/oder des Fahrverhaltens eines mit der Brennkraftmaschine ausgestatteten Fahrzeuges sein.

Aus EP 0 791 736 A2 ist eine Steuervorrichtung für eine Abgasrückführung einer Dieselbrennkraftmaschine bekannt, wobei in einer Betriebsphase ohne Abgasrückführung ein erwarteter Wert Q1 für eine der Brennkraftmaschine bei den momentanen Betriebsbedingungen zugeführten Frischluftmasse bestimmt und mit einem tatsächlichen Wert Q2 für eine der Brennkraftmaschine tatsächlich zugeführten Frischluftmasse verglichen wird. Falls sich eine Abweichung ergibt, wird von einer Abweichung in einem Ausgangssignal eines Luftmassensensors ausgegangen und dieses Ausgangssignal mit einem Korrekturfaktor belegt. Falls der Korrekturfaktor außerhalb eines vorbestimmten Bereiches liegt, wird ein fehlerhafter Luftmassensensor erkannt und eine entsprechende Wamleuchte aktiviert.

Aus Dokument DE ^197 05 766 C1 ist es bekannt, einen Luftmassensensor, welcher einen Messwert erzeugt, dadurch zu überwachen, dass von einem Beobachter ein Schätzwert für den erwarteten Messwert des Luftmassensensors ermittelt wird. Aus einer Differenz zwischen Schätzwert und Messwert wird ein fehlerhafter Sensor erkannt, wenn der Betrag der Differenz größer als ein Schwellenwert ist.

Aufgabe der vorliegenden Erfindung ist, ein Verfahren zum Überwachen der Funktion eines Luftmassenregelsystems für eine Brennkraftmaschine mit Abgasrückführung anzugeben, das in der Lage ist, Fehlfunktionen des Luftmassensensors zu erkennen.

Die Aufgabe wird mit einem Verfahren der o.g. Art mit den in Anspruch 1 gekennzeichneten Merkmalen gelöst.

Erfindungsgemäß ist es vorgesehen, dass bei erkannter Störung die Abgasrückführung der Brennkraftmaschine abgeschaltet wird, so dass diese unabhängig vom Betriebszustand nur noch mit Frischluft versorgt wird. Auf diese Weise wird so lange, wie die Störung des Regelsystems nicht behoben ist, zumindest eine Verbrennung unter Luftmangelbedingungen vermieden, die anderenfalls zu einem sehr hohen Ausstoß von Ruß und Kohlenmonoxid führen würde.

Wenn eine solche Störung erkannt wird, wird zweckmäßigerweise eine Warnmeldung erzeugt, die es einem Fahrer eines Kraftfahrzeuges oder einer sonstigen, eine erfindungsgemäß überwachte Brennkraftmaschine betreibenden Person ermöglicht, alsbald Reparaturmaßnahmen einzuleiten.

Der Vergleich erfolgt vorzugsweise unter Betriebsbedingungen der Brennkraftmaschine, bei denen keine Abgasrückführung stattfindet.

Die Betriebsbedingungen, von denen die von der Brennkraftmaschine aufgenommene Frischluftmenge wesentlich abhängt, sind ihre Drehzahl, die Temperatur der zugeführten Frischluft und der Ladedruck.

Eine Möglichkeit, die für das Verfahren benötigten erwarteten Werte der Frischluftmasse zu gewinnen, ist, diese an einem Prototypen der zu überwachenden Brennkraftmaschine experimentell zu ermitteln und die so erhaltenen erwarteten Werte für weitere, mit dem Prototypen baugleiche Brennkraftmaschinen zu verwenden.

Eine alternative Möglichkeit ist, diese erwarteten Werte an der überwachten Brennkraftmaschine selbst vorab zu ermitteln. Das heißt es werden die Luftmassenwerte, die in einer Einlaufphase der Brennkraftmaschine unter verschiedenen Betriebsbedingungen gemessen werden, als erwartete Werte für diese Betriebsbedingungen definiert. Werden später bei den gleichen Betriebsbedingungen deutlich abweichende Messwerte der zugeführten Frischluftmasse erhalten, so wird daraus gefolgert, dass eine Störung des Regelsystems vorliegt.

Weitere Merkmale und Vorteile der Erfindung ergeben sich aus der nachfolgenden Beschreibung eines Ausführungsbeispiels mit Bezug auf die Figuren.
Es zeigen:
Figur 1 schematisch die Luftversorgung einer Brennkraftmaschine, die mit einer erfindungsgemäßen Steuervorrichtung ausgestattet ist; und
Figur 2 veranschaulicht die Arbeitsweise der Steuervorrichtung.

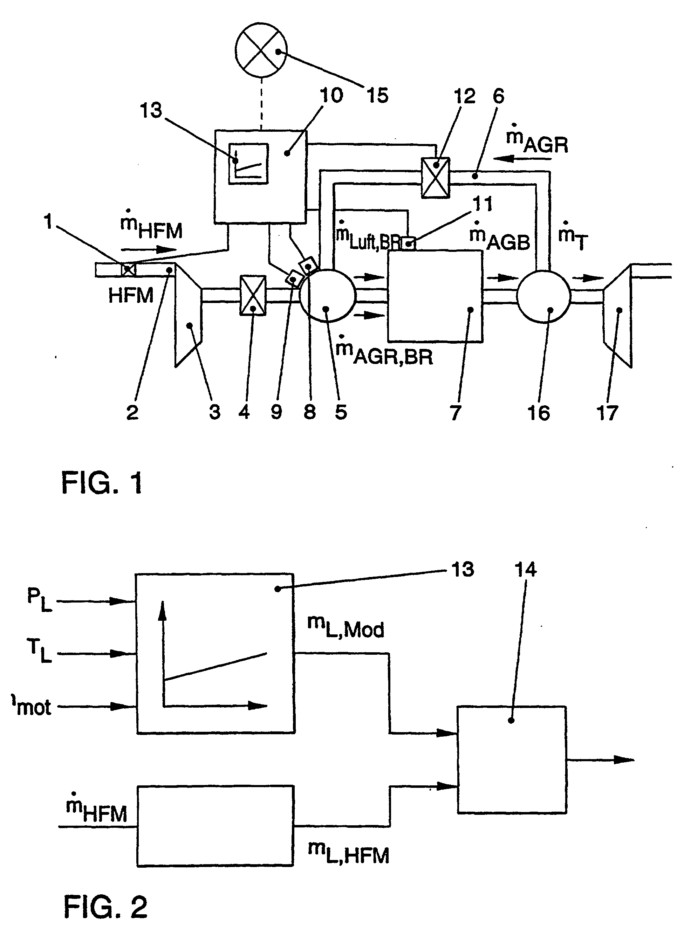

Figur 1 veranschaulicht die Luftströmung an einer Brennkraftmaschine am Beispiel einer Kompressormaschine. Ein Luftmassensensor 1 ist in einem Frischluft-Zufuhrkanal 2 angeordnet, der Frischluft von einem (nicht dargestellten) Luftfilter einem Verdichter 3 zuführt. Die Frischluft vom Verdichter 3 passiert eine Drosselstelle 4 und mischt sich in einem Einlasssammler 5 mit Abgas aus einer Abgasrückführleitung 6. Dieses Luftgemisch wird den Brennkammern einer Brennkraftmaschine 7 zugeführt. Die Rückführleitung ist an einen Sammler 16 am Auslass der Brennkammern angeschlossen. Nicht rückgeführtes Abgas durchläuft eine Turbine 17, in der es auf Umgebungsdruck entspannt wird und treibt so den Verdichter 3 an. Sensoren 8, 9 zum Messen von Druck und Temperatur des eingelassenen Luftgemisches sind in der Nähe des Einlaßsammlers 5 angeordnet. Eine Steuervorrichtung 10 empfängt Meßsignale von diesen Sensoren sowie von dem Luftmassensensor 1 und einem an der Kraftmaschine 7 angeordneten Drehzahlsensor 11.

Die Steuervorrichtung 10 ist mit einem Stellventil 12 in der Abgasrückführieitung 6 verbunden, um dessen Öffnungsgrad und damit die zum Einlaßsammler 5 rückgeführte Abgasmenge in Abhängigkeit von der erfaßten Frischluftmenge zu regeln. Gleichzeitig führt die Steuervorrichtung 10 eine Plausibilitätsprüfung der Meßwerte aller Sensoren durch, die in Figur 2 genauer dargestellt ist.

Die Steuervorrichtung verfügt über ein Speicherelement 13, das jeweils für Tripel von Werten des Ladedruckes p_{L}, der Temperatur der angesaugten Luft T_{L} und der Motordrehzahl n_{Mot} erwartete Werte von Frischluftmengen m_{L,Mod} enthält. Eine Rechenschaltung 14 ermittelt die Differenz zwischen dem erwarteten Wert m_{L,Mod} und einer aus dem Meßwert m_{HFM} berechneten Luftmenge m_{L,HFM}. Wenn die ermittelte Differenz einen Grenzwert überschreitet, erzeugt die Rechenschaltung ein Ausgangssignal, das direkt genutzt werden kann, um eine Warnmeldung auszugeben, z.B. mit Hilfe einer am Armaturenbrett des Kraftfahrzeuges angebrachten Warnleuchte, so daß der Fahrer den Fehler erkennen und möglichst bald beheben lassen kann. Das Ausgangssignal der Rechenschaltung 14 wird ferner genutzt, um das Stellventil 12 zu sperren, so daß keine Abgasrückführung mehr stattfindet, und die Brennkraftmaschine 7 ausschließlich mit Frischluft arbeitet.

Einer ersten Ausgestaltung der Erfindung zufolge ist das Speicherelement 13 ein Festwertspeicher, der vom Hersteller der Brennkraftmaschine oder der Steuervorrichtung mittelte erwartete Werte der zugeführten Frischluftmasse enthalten kann. Diese erwarteten Werte können z.B. an einem Prototypen der Brennkraftmaschine 7 einmal gemessen werden und dann in den Steuervorrichtungen jeweils baugleicher Brennkraftmaschinen eingesetzt werden.

Eine zweite Ausgestaltung sieht ein Speicherelement 13 in Form eines elektrisch beschreibbaren Speichers wie etwa eines EEPROMS vor, in das jeweils spezifisch für die zu überwachende Brennkraftmaschine im Laufe von deren Betrieb ermittelte erwartete Werte durch die Steuervorrichtung 10 selbst eintragbar sind. Dies erlaubt es z.B., Fertigungsstreuungen, z.B. in der Dosierung der eingespritzten Kraftstoffmenge durch eine (nicht dargestellte) Kraftstoffpumpe und im Verhalten des Stellventils 12 oder in der Empfindlichkeit der einzelnen Sensoren 1, 8, 9, 11 Rechnung zu tragen. Diese erwarteten Werte können ggf. aktualisiert werden, wenn dies durch eine Reparatur, die Arbeiten an der Einspritzpumpe, dem Stellventil oder den Sensoren beinhalten, notwendig geworden sein könnte.

Eine dritte Ausgestaltung sieht anstelle des Speicherelements eine Rechenschaltung, zum Beispiel einen Mikroprozessor, vor, die anhand des Tripels von Werten p_{L},T_{L} und nₘₒₜ erwartete Werte der Frischluftmenge m_{L,Mod} nach einem Modell berechnet.

## Patentansprüche

1. Verfahren zum Überwachen der Funktion eines Luftmassenregelsystems für eine Brennkraftmaschine mit Abgasrückführung, wobei ein Meßwert der der Brennkraftmaschine zugeführten Frischluftmasse mit einem erwarteten Wert verglichen wird, der in Abhängigkeit von Betriebsbedingungen der Brennkraftmaschine gegeben ist, und wobei bei Überschreitung einer zulässigen Abweichung zwischen Meßwert und Sollwert eine Störung des Luftmassenregelsystems erkannt wird,
**dadurch gekennzeichnet,**
**dass** bei Erkennung einer Störung die Abgasrückführung abgeschaltet wird.

2. Verfahren nach Anspruch 1,
**dadurch gekennzeichnet,**
**dass** bei Erkennung einer Störung eine Wammeldung erzeugt wird.

3. Verfahren nach Anspruch 1 oder 2,
**dadurch gekennzeichnet,**
**dass** der Vergleich unter Betriebsbedingungen der Brennkraftmaschine durchgeführt wird, bei denen keine Abgasrückführung stattfindet.

4. Verfahren nach einem der vorhergehenden Ansprüche,
**dadurch gekennzeichnet,**
**dass** die Betriebsbedingungen der Brennkraftmaschine wenigstens ihre Drehzahl, die Temperatur der zugeführten Luft und den Ladedruck umfassen.

5. Verfahren nach einem der vorhergehenden Ansprüche,
**dadurch gekennzeichnet,**
**dass** die erwarteten Werte vorab an einem Prototyp der Brennkraftmaschine ermittelt werden.

6. Verfahren nach einem der Ansprüche 1 bis 4,
**dadurch gekennzeichnet,**
**dass** die erwarteten Werte vorab an der überwachten Brennkraftmaschine ermittelt werden.

7. Verfahren nach Anspruch 5 oder 6,
**dadurch gekennzeichnet**,
da ss anhand der vorab ermittelten erwarteten Werte ein mathematisches Modell aufgestellt und während der Überwachung des Luftmassenregelsystems der für die jeweiligen Betriebsbedingungen geltende erwartete Wert anhand des Modells berechnet wird.

## Claims

1. Method for monitoring the functioning of an air mass control system for an internal combustion engine with exhaust gas recirculation, a measured value of the fresh air mass fed to the internal combustion engine being compared with an expected value which is given as a function of operating conditions of the internal combustion engine, and a disturbance of the air mass control system being detected upon overshooting of a permissible deviation between the measured value and desired value, **characterized in that** the exhaust gas recirculation is shut down upon detection of a disturbance.

2. Method according to Claim 1, **characterized in that** a warning message is produced upon detection of a disturbance.

3. Method according to Claim 1 or 2, **characterized in that** the comparison is carried out under operating conditions of the internal combustion engine under which no exhaust gas recirculation takes place.

4. Method according to one of the preceding claims, **characterized in that** the operating conditions of the internal combustion engine comprise at least its speed, the temperature of the fed air and the charging pressure.

5. Method according to one of the preceding claims, **characterized in that** the expected values are determined in advance on a prototype of the internal combustion engine.

6. Method according to one of Claims 1 to 4, **characterized in that** the expected values are determined in advance on the monitored internal combustion engine.

7. Method according to Claim 5 or 6, **characterized in that** a mathematical model is set up with the aid of the expected values determined in advance, and the expected value valid for the respective operating conditions is calculated with the aid of the model during monitoring of the air mass control system.

## Revendications

1. Procédé pour le contrôle du fonctionnement d'un système de régulation du débit massique d'air pour un moteur à combustion interne avec recirculation des gaz d'échappement, une valeur de mesure du débit massique d'air frais amené au moteur à combustion interne étant comparée à une valeur attendue donnée en fonction des conditions de marche du moteur à combustion interne, une perturbation du système de régulation du débit massique d'air étant décelée dans le cas d'un dépassement d'un écart autorisé entre la valeur de mesure et la valeur attendue, **caractérisé en ce que** la recirculation des gaz d'échappement est interrompue lorsqu'une perturbation est décelée.

2. Procédé selon la revendication 1, **caractérisé en ce qu'**un message d'avertissement est délivré lorsqu'une perturbation est décelée.

3. Procédé selon les revendications 1 ou 2, **caractérisé en ce que** la comparaison est effectuée dans des conditions de marche du moteur à combustion interne dans lesquelles aucune recirculation des gaz d'échappement n'a lieu.

4. Procédé selon l'une des revendications précédentes, **caractérisé en ce que** les conditions de marche du moteur à combustion interne comprennent au moins sa vitesse de rotation, la température de l'air amené et la pression d'admission.

5. Procédé selon l'une des revendications précédentes, **caractérisé en ce que** les valeurs attendues sont préalablement obtenues sur un prototype du moteur à combustion interne.

6. Procédé selon l'une des revendications 1 à 4, **caractérisé en ce que** les valeurs attendues sont préalablement obtenues sur le moteur à combustion interne surveillé.

7. Procédé selon les revendications 5 ou 6, **caractérisé en ce qu'**un modèle mathématique est construit sur base des valeurs attendues préalablement obtenues et la valeur attendue applicable à chacune des conditions de marche est calculée sur base du modèle lors du contrôle du système de régulation du débit massique d'air.
